Europäisches Patentamt

**European Patent Office**

Office européen des brevets

(19)

(11) Numéro de publication: **0 083 542**
**B1**

(12)

# FASCICULE DE BREVET EUROPEEN

(45) Date de publication du fascicule du brevet:
10.07.85

(51) Int. Cl.⁴: **H 04 J 15/00, G 02 B 6/24**

(21) Numéro de dépôt: **82402383.2**

(22) Date de dépôt: **24.12.82**

(54) Sélecteur de longueurs d'ondes.

(30) Priorité: **24.12.81 FR 8124211**

(43) Date de publication de la demande:
**13.07.83 Bulletin 83/28**

(45) Mention de la délivrance du brevet:
**10.07.85 Bulletin 85/28**

(84) Etats contractants désignés:
**AT BE CH DE FR GB IT LI LU NL SE**

(56) Documents cités:
**EP - A - 0 037 787**
**US - A - 3 953 727**

**SOVIET JOURNAL OF QUANTUM ELECTRONICS, vol. 8, no. 2, février 1981, pages 229-231, New York, USA E.M. DIANOV et al.: "Spectral channel demultiplexer utilizing a planar multimode waveguide"**
**LASER FOCUS, vol. 17, no. 2, février 1981, page 68, Newton, Massachusetts, USA T. TANAKA et al.: "Simple multiplexer/demultiplexer"**

(73) Titulaire: **INSTRUMENTS S.A., 25, aveneu de l'Opéra, F-75001 Paris (FR)**

(72) Inventeur: **Gacoin, Philippe, 32 route de Belleville, F-91190 Glf-Sur-Yvette (FR)**
Inventeur: **Flamand, Jean, 33 rue Gustave Robin, F-92290 Chatenay (FR)**
Inventeur: **Laude, Jean-Pierre, 3 rue des Graverlots, F-91690 St. Cyr la Rivière (FR)**

(74) Mandataire: **Le Brusque, Maurice et al, CREUSOT-LOIRE 15 rue Pasquler, F-75383 Paris Cedex 08 (FR)**

## Description

La présente invention concerne un sélecteur pour séparer deux plages de longueurs d'onde dans une lumière complexe. Elle s'applique plus particulièrement au multiplexage ou séparation d'informations transmises par fibres otiques.

Le développement de la technique de transmission d'informations par modulation de signaux lumineux transmis à longue distance par fibres optiques a conduit à faire transmettre par une même fibre plusieurs signaux portés chacun par des lumières de longueurs d'onde ou de plages de longueurs d'onde différentes. Il est donc important, à l'extrémité de la fibre, de séparer les diverses plages pour détecter séparément chacun des signaux associés à chaque plage.

On connaît, par la publication EP-A-0 037 787, un composant optique dans lequel une lumière complexe est introduite par une fibre optique à travers un orifice dans un réseau dispersif plan jusqu'au voisinage immédiat du foyer principal d'un miroir concave. Celui-ci rennvoie un faisceau parallèle vers le réseau qui le réflèchit à son tour en plusieurs faisceaux parallèles monochromatiques. Chaque faisceau monochromatique est focalisé par le milroir sphérique vers des points foyers séparés où l'on peut recueillir les longueurs d'onde recherchées en y disposant l'extrémité de fibres optiques de sortie.

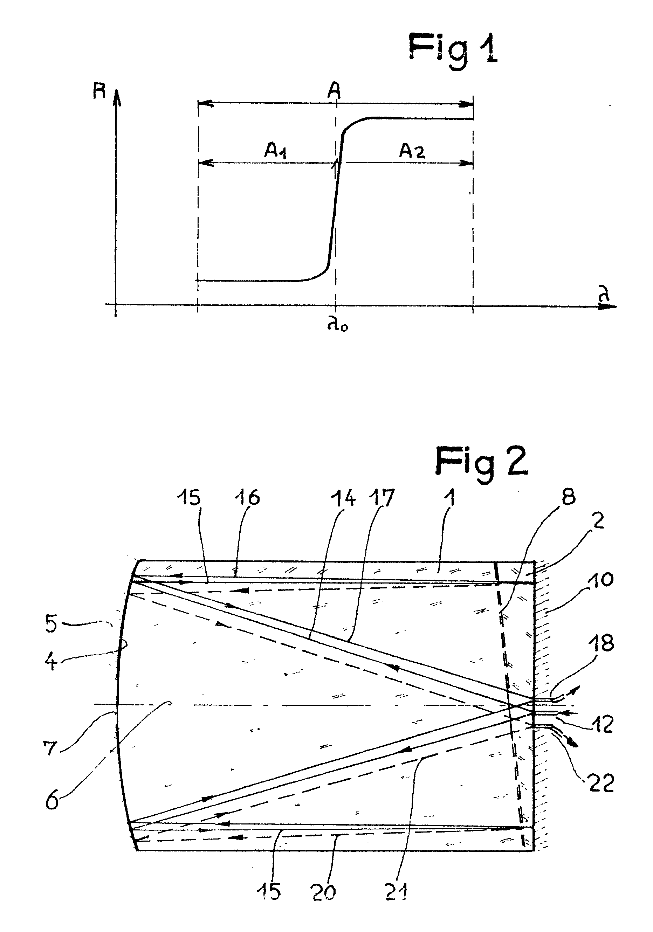

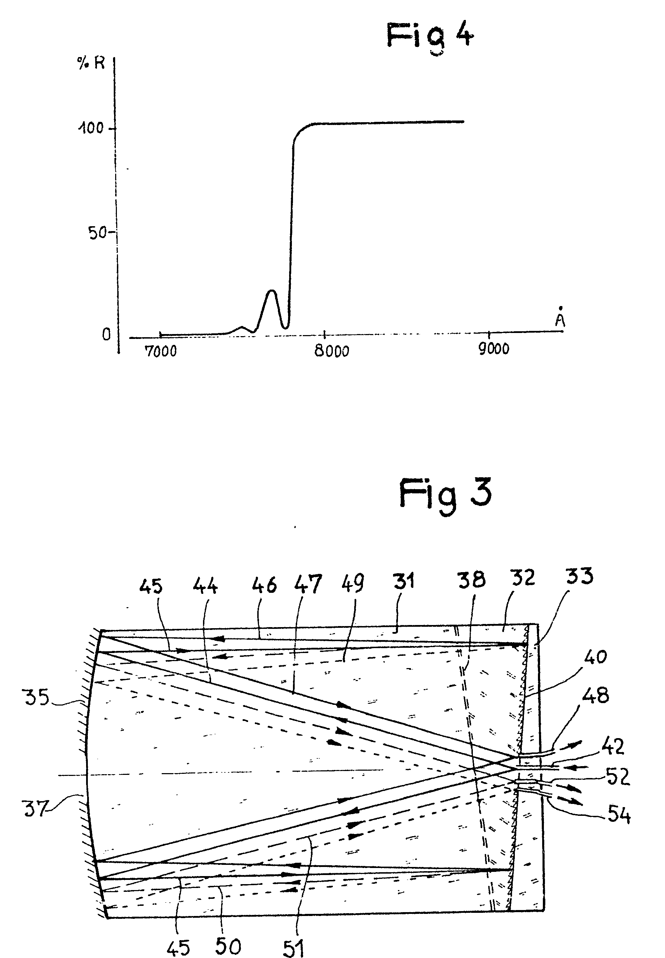

On connait par ailleurs les propriétés des couches multidiélectriques constituées par une superposition de couches minces, d'épaisseur de l'ordre du quart de la longueur d'onde de la lumière concernée, et alternativement en matériaux de fort et de faible indice, comme par exemple du sulfure de zinc ou de la cryolithe. Par un choix convenable du nombre et de l'épaisseur des couches élémentaires on obtient une couche globale qui, relativement à une longueur d'onde critique, réfléchit les longueurs d'onde supérieures par exemple à cette valeur critique $\lambda_0$ tandis qu'elle laisse passer les longueurs d'onde inférieures. Ceci est illustré par le graphique simplifié de la figure 1 où l'on a représenté en ordonnées, pour chaque longueur d'onde, l'énergie lumineuse recueillie après réflexion par une couche multidiélectrique d'un faisceau lumineux émettant dans une large bande spectrale A. Dans la bande $A_1$ dont les longueurs d'onde sont inférieures à la longueur d'onde critique $\lambda_0$ de la couche, la lumière réfléchie est presque nulle tandis que dans la bande $A_2$ dont les longueurs d'onde sont supérieures à $\lambda_0$ la lumière est pratiquement réfléchie. La couche diélectrique se comporte donc comme un miroir pour la bande $A_2$ et comme une lame transparente pour la bande $A_1$.

L'invention constitue une application nouvelle d'une couche multidiélectrique pour séparer, dans une lumière introduite dans le sélecteur par une fibre optique d'entrée, deux bandes différentes de longueurs d'onde et les recueillir séparément sur au moins deux autres fibres optiques de sortie.

L'invention concerne un sélecteur pour séparer au moins deux plages de longueurs d'onde dans une lumière complexe introduite dans l'appareil par l'extrémité d'une fibre optique disposée au voisinage immédiat du foyer d'un miroir concave produisant un faisceau parallèle dirigé vers un dispositif réféchissant plan, le miroir concave recevant en retour au moins deux faisceaux parallèles qui sont focalisés respectivement vers au moins deux fibres optiques de sortie.

Selon l'invention le sélecteur comporte au moins une couche multidiélectrique plane interposée entre le miroir concave et le dispositif réfléchissant plan et formant avec l'axe au sommet du miroir concave un angle légèrement différent de celui du dispositif réfléchissant plan, chaque couche multidiélectrique présentant une interruption au voisinage de l'axe au sommet du miroir concave, chaque couche multidiélectrique séparant le faisceau parallèle dirigé vers le dispositif réféchissant plan en deux plages particulières de longueurs d'onde, une plage traversant la couche et l'autre étant réfléchie par la couche.

Selon une forme particulière de réalisation de l'invention le dispositif réfléchissant plan est un miroir plan.

Selon une autre forme de réalisation de l'invention le dispositif réfléchissant est un réseau plan de diffraction par réflexion.

L'invention sera mieux comprise en se référant aux modes de réalisation particuliers donnés à titre d'exemple et représentés par les autres dessins annexés.

La figure 2 montre un dispositif destiné à séparer simplement deux bandes de longueurs d'onde.

La figure 3 montre und dispositif fonctionnant également en monochromateur dans une bande de longueurs d'onde.

En se référant tout d'abord à la figure 2, on voit que le dispositif est constitué par la juxtaposition de deux blocs de verre 1 et 2. Le bloc 1 présente une partie convexe sphérique ou parabolique 4. La surface 4 est rendue réfléchissante par un revêtement 5 qui constitue ainsi, vers l'intérieur du bloc, un miroir concave dont l'axe principal 6 est la normale au sommet de la surface 4. Le revêtement 5 est interrompu sur une petite zone centrale 7 au voisinage du sommet de la partie convexe. Le bloc 1 présente, à l'extrémité opposée à la surface 4, une surface plane sur laquelle est collé le deuxième bloc 2 présentant une surface plane conjugéé. Cette dernière surface plane porte une couche multidiélectrique 8, également interrompue au voisinage de l'axe principal 6 du miroir 5. Sur son autre face le bloc 2 constitue un miroir plan 10 perpendiculaire à l'axe 6 et disposé dans le plan focal du miroir concave 5.

L'extrémité de la fibre optique d'entrée 12 affleure à la surface du miroir plan 10 et est très légèrement décalée par rapport au foyer du miroir 5. Le faisceau 14 issu de l'extrémité de la fibre 12 passe dans la zone où la couche 8 est interrompue et se réfléchit sur le miroir 5 en un faisceau parallèle 15. Dans le faisceau 15 de largeur spectrale A (figure 1), la bande $A_1$ traverse la couche 8 et se réfléchit sur le miroir 10 en un faisceau parallèle 16 qui à nouveau traverse la couche 8; par réflexion sur le miroir 5 il devient le faisceau 17 qui se focalise en un point légèrement décalé par rapport au foyer du miroir 5 et où il est recueilli par la fibre de sortie 18.

Dans le faisceau parallèle 15 la bande spectrale $A_2$ ne traverse pas la couche 8, mais celle-ci le réfléchit comme un miroir plan en un nouveau faisceau parallèle 20 décalé angulairement en fonction de l'angle de la couche 8 par rapport à l'axe 6. Le faisceau 20 est réfléchi en un faisceau 21 qui est focalisé sur l'extrémité d'une autre fibre de sortie 22.

On voit que la couche 8, par sa structure et son inclinaison par rapport à l'axe 6, sépare les deux bandes $A_1$ et $A_2$ de la bande globale A et, en modifiant la direction angulaire de l'une, permet de les recueillir sur les deux fibres séparées 18 et 22. On notera que la zone non réfléchissante 7 permet d'éliminer les rayons issus de la fibre d'entrée 12 et qui auraient pu atteindre directement les fibres de sortie 18 et 22 sans être filtrés par la couche 8.

En pratique on réalise la couche multidiélectrique 8 par une alternance de couches de haut et bas indice et d'épaisseur optique environ $\frac{\lambda_c}{4}$ , $\lambda_c$ étant la longueur d'onde centrale de la plage $A_2$ où le pouvoir réflecteur doit être maximum, et dans le cas de l'orde O pour le filtre ainsi constitué. Pour l'ordre 1, qui permet une séparation plus tranchée des bandes, l'épaisseur optique des couches sera $\frac{3\lambda_c}{4}$ .

Ainsi pour séparer une bande $A_1$ de 7000 à 7400 Å et une bande $A_2$ de 8000 à 8800 Å, avec des supports 1 et 2 d'indice 1,563 et en travaillant dans l'ordre 1, on utilisera des couches H d'indice 2,35 et d'épaisseur 2625 Å et des couches L d'indice 1,35 et d'épaisseur 4569 Å, la longueur d'onde centrale de la Iplage $A_2$ étant prise à 8225 Å. La couche 8 comprendra alors une demi-couche H, puis neuf couches L intercalées avec huit couches H, puis à nouveau une demi-couche H.

La figure 4 représente alors le pouvoir réflecteur en fonction de la longueur d'onde, et celui-ci atteindra 0,998 pour la plage de 8000 à 8800 Å, tandis qu'il sera pratiquement nul pour la plage de 7000 à 7400 Å.

Le dispositif plus complet de la figure 3 pemet non seulement la sélection de la bande $A_1$ mais encore, à l'intérieur de la bande $A_1$, la sélection d'une ou plusieurs longueurs d'onde nonchromatiques.

Pour celà le bloc 32, homologue du bloc 2 de la figure 2, est collé sur lun troisième bloc 33 portant un réseau plan de diffraction 40. Comme dans le cas précédent le faisceau 44 issu de l'extrémité de la fibre d'entrée 42 est réfléchi en un faisceau parallèle 45 par le miroir 35, à l'exception des rayons qui aboutissent à la zone non réfléchissante 37. Ici encore la bande $A_2$ réfléchie en 50 par la couche 38, et en 51 par le miroir 35, est focalisée sur la fibre de sortie 52.

Par contre les longueurs d'onde de la bande $A_1$, après traversée de la couche 38, rencontrent le réseau 40 qui les disperse dans des directions différentes. Ainsi par exemple l'une des longueurs d'onde sera renvoyée en un faisceau parallèle 46 puis réfléchi en un faisceau 47 pour être focalisé sur l'extrémité de la fibre de sortie 48. Une autre longueur d'onde donnera le faisceau 49 qui sera de la même façon focalisé sur une autre fibre de sortie 54. L'ensemble optique ainsi constitué se comporte donc comme un sélecteur de bande pour la bande $A_2$, et comme un monochromateur pour les longueurs d'onde de la bande $A_1$.

Bien entendu l'incvention n'est pas strictement limitée aux modes de réalisation qui ont été décrits à titre d'exemple, mais elle couvre aussi les réalisations qui n'en différeraient que par des détails, par des variantes de réalisation ou par l'utilisation de moyens équivalents. Ainsi dans le cas de la figure 2, au lieu de décaler légèrement la fibre d'entrée 12 par rapport au foyer du miroir 5, on pourrait aussi pour que la focalisation sur la fibre de sortie 18 soit distincte de l'extrémité de la fibre 12, placer cette fibre d'entrée 12 juste au foyer du miroir concave 5, mais donner au miroir plan 10 un angle très légèrement différent de 90° par rapport à l'axe 6.

On pourrait aussi utiliser plusieurs couches multidiélectriques l'une derière l'autre avec des angles légèrement différents réalisant ainsi autant de miroirs dichroïques, chaque couche séparant deux plages particulières de longueurs d'onde.

### Revendications

1. Sélecteur pour séparer au moins deux plages de longueurs d'onde ($A_1$, $A_2$) dans une lumière complexe (A) introduite dans l'appareil par l'extrémité d'une fibre optique (12) disposée au voisinage immédiat du foyer d'un miroir concave (5) produisant un faisceau parallèle (15) dirigé vers un dispositif réfléchissant plan (10), le miroir concave (5) recevant en retour au moins deux faisceaux parallèles (16, 17) qui sont focalisés respectivement vers au moins deux fibres optiques de sortie (18, 22), caractérisé par le fait qu'il comporte au moins une couche multidiélectrique plane (8) interposée entre le miroir concave (5) et le dispositif réfléchissant plan (10) et formant avec l'axe (6) au sommet du miroir concave un angle légèrement différent de celui du dispositif réfléchissant plan, chaque couche multidiélectrique présentant une interruption au voisinage de l'axe au sommet du miroir concave, chaque couche multidiélectrique séparant le faisceau parallèle (15) dirigé vers le dispositif réfléchissant plan (10) en deux plages particulières de longueurs d'onde, une plage traversant la couche et l'autre étant réfléchie par la couche.

2. Sélecteur selon revendication 1, caractérisé par le fait que le dispositif réfléchissant plan est un miroir plan (10).

3. Sélecteur selon revendication 1, caractérisé par le fait que le dispositif réfléchissant plan est un réseau plan de diffraction par réflexion (40).

## Patentansprüche

1. Auswahleinrichtung zum Trennen von wenigstens zwei Wellenlängenbereichen (A₁, A₂) in einem komplexen bzw. zusammengesetzten Licht (A), das in die Einrichtung mittels des Endes einer optischen Faser bzw. eines Lichtleiters (12) eingeführt wird, das in unmittelbarer Nachbarschaft des Brennpunktes eines Konkavspiegels (5) angeordnet ist, der ein Parallelstrahlenbündel (15) erzeugt, das gegen eine ebene Rückstrahlvorrichtung (10) gerichtet ist, wobei der Konkavspiegel (5) wenigstens zwei reflektierte, zurücklaufende Parallelstrahlenbündel (16, 17) empfängt, die jeweils auf wenigstens zwei Ausgangs-Lichtleiter (18, 22) fokussiert sind, dadurch gekennzeichnet, daß sie wenigstens eine ebene Multidielektrikums-Schicht (8) umfaßt, die zwischen den Konkavspiegel (5) und die ebene Rückstrahlvorrichtung (10) zwischengeschaltet ist und die mit der Achse (6) im Scheitel des Konkavspiegels einen Winkel bildet, der etwas von jenem der ebenen Rückstrahlvorrichtung abweicht, wobei jede Multidielektrikums-Schicht in der Nachbarschaft der Achse am Scheitel des Konkavspiegels eine Unterbrechung bzw. Unstetigkeitsstelle aufweist, wobei jede Multidielektrikums-Schicht das gegen die ebene Rückstrahlvorrichtung (10) gerichtete Parallelstrahlenbündel (15), in zwei gesonderten Wellenlängenbereiche trennt, von denen ein Bereich die Schicht durchdringt und der andere Bereich von der Schicht reflektiert wird.

2. Auswahleinrichtung nach Anspruch 1, dadurch gekezeichnet, daß die ebene Rückstrahlvorrichtung ein ebener Spiegel (10) ist.

3. Auswahleinrichtung nach Anspruch 1, dadurch gekennzeichnet, daß die ebene Rückstrahlvorrichtung ein ebenes, refelektierendes Beugungsgitter (4) ist.

## Claims

1. Selector for separating at least two wavelength ranges (A₁, A₂) in a complex light (A) entering the apparatus through the end of an optical fibre (12) arranged in the immediate vicinity of the focus of a concave mirror (5) producing a parallel beam (15) directed towards a plane reflecting device (10), the concave mirror (5) receiving in return at least two parallel beams (16, 17) which are focused respectively towards at least two exit optical fibres (18, 22), characterised in that it contains at least one plane multidielectric layer (8) placed between the concave mirror (5) and the plane reflecting device (10) and forming, with the axis (6) at the apex of the concave mirror, an angle which is slightly different form that of the plane reflecting device, each multidielectric layer forming a discontinuity in the vicinity of the axis at the apex of the concave mirror, each multidielectric layer separating the parallel beam (15) directed towards the plane reflecting device (10) into two particular wavelength ranges, one range passing through the layer and the other being reflected by the layer.

2. Selector according to Claim 1, characterised in that the plane reflecting device is a plane mirror (10).

3. Selector according to Claim 1, characterised in that the plane reflecting device is a plane grating for diffraction by reflection (40).

# Fig 1

# Fig 2

# Fig 4

# Fig 3